# EUROPÄISCHE PATENTSCHRIFT

(11) **EP 3 631 024 B1**
(45) Veröffentlichungstag und Bekanntmachung des Hinweises auf die Patenterteilung: **26.06.2024**
(21) Anmeldenummer: 18730660.0
(22) Anmeldetag: 25.05.2018
(51) Int. Cl.: C21D 9/38, C21D 1/09, C21D 9/22, C21D 9/28

(54) **HÄRTUNGSVERFAHREN UND HÄRTUNGSVORRICHTUNG ZUM OBERFLÄCHENHÄRTEN EINES ROTATIONSSYMMETRISCHEN WERKSTÜCKS**
HARDENING METHOD AND APPARATUS FOR SURFACE HARDENING OF A ROTATIONALLY SYMMETRICAL WORKPIECE
PROCÉDÉ ET DISPOSITIF DE TREMPE POUR LE DURCISSEMENT DE SURFACE D'UNE PIÈCE À SYMMÉTRIE DE ROTATION

(30) Priorität: 26.05.2017 DE 102017111541
(43) Veröffentlichungstag der Anmeldung: 08.04.2020
(73) Patentinhaber: Walzengießerei Coswig GmbH, 01640 Coswig (DE)
(72) Erfinder: BAUMGART, Sven, 01665 Diera-Zehren (DE); NELLE, Stefan, 04910 Elsterwerda (DE); NOACK, Tino, 01558 Grossenhain (DE); FÜSSEL, Thomas, 01458 Ottendorf-Okrilla (DE)
(74) Vertreter: Lippert Stachow Patentanwälte Rechtsanwälte Partnerschaft mbB
(86) Internationale Anmeldenummer: PCT/EP2018/063804
(87) Internationale Veröffentlichungsnummer: WO 2018/215650

(56) Entgegenhaltungen:
- CN-A- 102 010 940
- DE-C1- 4 001 144
- JP-A- 2015 063 715
- US-A- 4 628 179

## Beschreibung

Die Erfindung betrifft ein Härtungsverfahren und eine Härtungsvorrichtung zum Oberflächenhärten eines rotationssymmetrischen Werkstücks. Insbesondere betrifft die Erfindung ein Verfahren und eine Vorrichtung zum Oberflächenhärten rotationssymmetrischer Werkzeuge, die auf ihrer Mantelfläche mindestens einen Arbeitsbereich aufweisen, der bei bestimmungsgemäßer Verwendung des Werkzeugs auf ein zu bearbeitendes Material einwirkt.

Beispiele für derartige Werkzeuge sind Walzen, wie sie in Walzwerken zur Formgebung von Stahlprodukten verwendet werden, und Kegel, wie sie in Kegelbrechern zur Zerkleinerung von Gestein verwendet werden. Vorgeschlagen werden auch Verfahren zur Oberflächenhärtung derartiger Produkte sowie Vorrichtungen zur Durchführung derartiger Verfahren.

Martensitisches Umwandlungshärten durch Einwirkung gebündelter energiereicher Laserstrahlung ist bekannt. Beim Laserhärten wird die Randschicht kohlenstoffhaltiger Eisenwerkstoffe (C- Gehalt > 0,3 %) so schnell aufgeheizt, dass die Abkühlung als Selbstabschreckung durch die umgebenden kalten Materialschichten erfolgt. Der Vorgang der Erwärmung, Austenitisierung und Abschreckung zu Martensitbildung ist der gleiche wie bei der konventionellen martensitischen Härtetechnik, läuft jedoch bei kürzeren Zeiten und höheren Temperaturen bis knapp unterhalb der Schmelzgrenze ab. Die Einhärtetiefe ist auf Werte unter 2 mm begrenzt, da über die Wärmeleitung die Selbstabschreckung gewährleistet werden muss und die Begrenzung der Oberflächentemperatur auf die Schmelztemperatur die Austenitisierungstiefe begrenzt.

Die Druckschrift DE 40 01 144 C1 offenbart ein Verfahren zur Härtung der rotationssymmetrischen Oberflächenregime eines metallischen Werkstücks, bei dem das Werkstück gedreht und lokal auf eine Temperatur erhitzt wird. Dabei wird der zu härtende Oberflächenbereich aufgrund einer Drehung des Werkstückes um die Symmetrieachse des rotationssymmetrischen Oberflächenbereiches an einer Strahleinwirkungsstelle vorbeibewegt. Dabei wird das Werkstück mit einer derart hohen Umfangsgeschwindigkeit gedreht, dass bei der Bestrahlung eine bestimmte Umfangsstelle des Oberflächenbereichs des Werkstückes mehrmals an der Strahleinwirkungsstelle vorbei bewegt wird.

Die Druckschrift CN 102 010 940 A offenbart ein Laser-Oberflächenbehandlungsverfahren, insbesondere ein Laser-Oberflächenbehandlungsverfahren einer Durchlaufwalze, umfassend die folgenden Schritte: A. Messen des Verschleißgrades von Positionen auf der Oberfläche der Durchlaufwalze nach Gebrauch und bei Nichtgebrauch; B. Ausführen einer Fehlererkennung an der Durchlaufwalze; C. Ausführen einer Oberflächenvorbehandlung an der Durchlaufwalze; und D. Ausführen einer Laser-Oberflächenbehandlung, wobei die Oberflächenhärte der Positionen auf der Oberfläche der Durchlaufwalze nach der Laser-Oberflächenbehandlung mit der Zunahme des Verschleißgrades zunimmt. Es wird eine Laserverfestigungsbehandlung an den Positionen auf der Oberfläche der Durchlaufwalze entsprechend dem Verschleißgrad der Positionen auf der Oberfläche der Durchlaufwalze im tatsächlichen Betrieb durchgeführt, um einen gleichmäßigen Verschleiß der Oberfläche der Durchlaufwalze während des nachfolgenden Nutzungsprozesses zu realisieren.

In US 4 628 179 A wird ein Verfahren zum Behandeln der Oberfläche einer Walze offenbart, durch Fokussieren eines im Wesentlichen kontinuierlichen, konzentrierten Korpuskularstrahls, z.B. eines Laserstrahls oder eines Elektronenstrahls, auf die Walzenoberfläche, Führen des Strahls zum Auftreffen auf die Walzenoberfläche in einer schraubenförmigen Bahn, und Regulieren der Konzentration des Strahls, der relativen Rotationsgeschwindigkeit der Walze und der Translationsgeschwindigkeit des Strahls, so dass das Verhältnis der Steigung der schraubenförmigen Bahn und der Breite der Bahn des Strahls auf der Walzenoberfläche kleiner als 1 ist.

Schließlich beschreibt JP 2015 063715 A ein Laserhärteverfahren, bei dem ein erster Laserkopf und ein zweiter Laserkopf, die einen Laserstrahl ausstrahlen, horizontal mit einer konstanten Geschwindigkeit in Umfangsrichtung mit der Mittelachse eines Wellenelements als Zentrum um das Wellenelement, d.h. das zu bestrahlende Objekt, drehbar sind.

Die Anwendung des Laserhärtens ist bisher außerdem auf kleine Bereiche der Oberfläche eines zu härtenden Werkstücks begrenzt, weil der Einwirkbereich des fokussierten Laserstrahls relativ klein ist und daher eine Härtung sehr großer Oberflächen auf diesem Wege nicht nur sehr zeitaufwändig wäre, sondern eine über die gesamte Oberfläche homogene Härtung damit bisher nicht möglich erschien.

Die Erfindung stellt sich daher die Aufgabe, Verfahren und Vorrichtungen anzugeben, die es ermöglichen, auch relativ große Oberflächen, insbesondere von großen rotationssymmetrischen Werkstücken wie Profilwalzen für Stahlwalzwerke, Brecherkegel für Kegelbrecher, Antriebswellen für Windkraftwerke oder andere Energieerzeugungs- oder -umwandlungsanlagen und dergleichen, relativ homogen zu härten, und Anwendungsgebiete für diese Verfahren und Vorrichtungen anzugeben.

Diese Aufgabe wird gelöst durch ein Härtungsverfahren mit den Merkmalen des Anspruchs 1 und eine Härtungsvorrichtung mit den Merkmalen des Anspruchs 7. Vorteilhafte Ausgestaltungen und Weiterbildungen sind Gegenstand der abhängigen Ansprüche.

Vorgeschlagen wird zunächst ein Härtungsverfahren zum Oberflächenhärten eines rotationssymmetrischen Werkstücks mit einer Mantelfläche und einer Längsachse, bei dem mindestens eine Laservorrichtung so auf das Werkstück gerichtet wird, dass eine von der Laservorrichtung erzeugte, gebündelte energiereiche Strahlung auf einen Einwirkbereich der Mantelfläche einwirkt, wobei
- das Werkstück um seine Längsachse drehbar gehalten und mit einer wählbaren Rotationsgeschwindigkeit in Rotation um seine Längsachse versetzt wird, und
- die mindestens eine Laservorrichtung entlang der Längsachse des Werkstücks bewegt wird, wobei
- die Rotationsgeschwindigkeit des Werkstücks abhängig von der Strahlungsleistung der Laservorrichtung, der Größe des Einwirkbereichs und dem Durchmesser des Werkstücks so gewählt wird, dass die in die Mantelfläche eingetragene Energie pro Flächeneinheit im Wesentlichen konstant ist und wobei
- die Rotationsgeschwindigkeit des Werkstücks abhängig von einem lokalen Durchmesser des Werkstücks so gewählt wird, dass die in die Mantelfläche eingetragene Energie pro Flächeneinheit auch bei einem axial veränderlichen lokalen Durchmesser des Werkstücks im Wesentlichen konstant ist.

Das vorgeschlagene Härtungsverfahren ermöglicht es, relativ große Oberflächenbereiche rotationssymmetrischer Werkstücke vergleichsweise schnell, einfach und mit sehr homogenem Härteverlauf zu härten. Hierzu trägt vor allem bei, dass die Intensität der von der Laservorrichtung erzeugten energiereichen Strahlung aufgrund des während der Rotation des Werkstücks konstant bleibenden Abstands zwischen dem zu härtenden Oberflächenbereich und der Laservorrichtung ebenfalls konstant bleibt, und dass die Laservorrichtung durch die Kombination von Rotation (des Werkstücks) und Translation (der Laservorrichtung) große Oberflächenbereiche lückenlos überstreichen kann. Hierzu sind grundsätzlich zwei verschiedene Verfahrensvarianten möglich:
In einer ersten, intermittierenden Verfahrensvariante des vorgeschlagenen Härtungsverfahrens kann vorgesehen sein, dass
- die Laservorrichtung mindestens während einer vollen Umdrehung des Werkstücks relativ zu dessen Längsachse ortsfest gehalten wird,
- anschließend die Laservorrichtung um einen wählbaren axialen Verstellweg entlang der Längsachse bewegt wird, und
- die beiden obigen Schritte einmal oder mehrmals wiederholt werden.

Mit anderen Worten überstreicht der von der Laservorrichtung erzeugte Energiestrahl zunächst einen ringförmigen Oberflächenbereich, dessen Breite durch die Breite des Einwirkbereichs des auftreffenden Laserstrahls bestimmt ist. Ist dieser ringförmige Oberflächenbereich nach einer vollen Umdrehung des Werkstücks geschlossen, so wird die Rotation des Werkzeugs gestoppt. Die Laservorrichtung wird in der Längsrichtung des Werkstücks weiterbewegt.

Beispielsweise kann der Verstellweg der Laservorrichtung kleiner oder gleich einer axialen Ausdehnung des Einwirkbereichs gewählt werden und die beiden Schritte (volle Rotation des Werkstücks, axiale Verstellung der Laservorrichtung) so oft wiederholt werden, dass der Einwirkbereich der Laservorrichtung die Mantelfläche des Werkstücks lückenlos überstreicht.

Der Verstellweg der Laservorrichtung kann also beispielsweise so groß gewählt werden, dass zwei aufeinanderfolgende, gehärtete ringförmige Oberflächenbereiche direkt aneinander anschließen, d.h. der Verstellweg entspricht der in der Längsrichtung des Werkstücks gemessenen Breite des Einwirkbereichs der Laservorrichtung. Alternativ kann der Verstellweg auch kleiner gewählt sein, weil die Einhärtetiefe zum Rand des ringförmigen Oberflächenbereichs abnimmt. Es entsteht so eine gewisse Überlappung zweier aufeinanderfolgender, gehärteter ringförmiger Oberflächenbereiche, wodurch dieser Effekt ausgeglichen werden kann, insbesondere wenn mit hoher Intensität bestrahlt wird und die Rotationsgeschwindigkeit so hoch ist, dass der zuerst bestrahlte ringförmige Oberflächenbereich noch nicht vollständig ausgekühlt ist, wenn der nächste ringförmige Oberflächenbereich bestrahlt wird. Für Spezialanwendungen kann der Verstellweg auch größer gewählt werden als die in der Längsrichtung des Werkstücks gemessene Breite des Einwirkbereichs der Laservorrichtung, wodurch zwischen zwei benachbarten ringförmigen gehärteten Oberflächenbereichen ein ringförmiger Oberflächenbereich ungehärtet bleibt.

In einer zweiten, kontinuierlichen Verfahrensvariante des vorgeschlagenen Härtungsverfahrens kann vorgesehen sein, dass die Laservorrichtung während der Rotation des Werkstücks relativ zu dessen Längsachse bewegt wird. Es ergibt sich damit ein spiralförmiger, d.h. schraubenlinienförmiger gehärteter Oberflächenbereich.

Es wird vorgeschlagen, dass die Laservorrichtung mit einer relativ zu der gewählten Rotationsgeschwindigkeit des Werkstücks und der axialen Ausdehnung des Einwirkbereichs so gewählten axialen Geschwindigkeit bewegt wird, dass der Einwirkbereich der Laservorrichtung die Mantelfläche des Werkstücks lückenlos überstreicht.

Analog wie oben zu der intermittierenden Verfahrensvariante beschrieben kann demnach für eine lückenlose Oberflächenhärtung die Verstellgeschwindigkeit der Laservorrichtung in axialer Richtung entweder so gewählt werden, dass der Einwirkbereich des Laserstrahls zu jedem Zeitpunkt bis exakt an die vorherige Windung der Schraubenlinie heranreicht, oder dass der Einwirkbereich noch einen Randstreifen der vorherigen Windung der Schraubenlinie überlappt. Alternativ kann auch hier für Spezialanwendungen die Verstellgeschwindigkeit der Laservorrichtung in axialer Richtung so gewählt werden, dass zwischen je zwei Windungen der gehärteten Schraubenlinie eine ungehärtete Schraubenlinie verbleibt.

Bei der kontinuierlichen Verfahrensvariante des vorgeschlagenen Härtungsverfahrens kann weiter vorgesehen sein, dass
- zunächst die Laservorrichtung von einer ersten Position zu einer zweiten Position relativ zu der Mantelfläche in axialer Richtung bewegt wird, und
- anschließend die Laservorrichtung von der zweiten Position zu der ersten Position zurück bewegt wird.

Hierdurch überlagern sich zwei gehärtete Schraubenlinien mit entgegengesetztem Drehsinn, wodurch sich insbesondere in den zuletzt genannten Fällen, bei denen neben der gehärteten Schraubenlinie ungehärtete Oberflächenbereiche erhalten bleiben, auf der zu härtenden Oberfläche ein Rautenmuster ergibt, das insbesondere für Spezialanwendungen von Interesse ist, auf die noch näher eingegangen wird.

Um eine möglichst homogene Oberflächenhärtung zu erzielen ist bei dem vorgeschlagenen Härtungsverfahren weiter vorgesehen, dass die Rotationsgeschwindigkeit des Werkstücks abhängig von der Strahlungsleistung der Laservorrichtung, der Größe des Einwirkbereichs und dem Durchmesser des Werkstücks so gewählt wird, dass die in die Mantelfläche eingetragene Energie pro Flächeneinheit im Wesentlichen konstant ist.

Zusätzlich wird vorgeschlagen, dass die Rotationsgeschwindigkeit des Werkstücks abhängig von einem lokalen Durchmesser des Werkstücks so gewählt wird, dass die in die Mantelfläche eingetragene Energie pro Flächeneinheit auch bei einem axial veränderlichen lokalen Durchmesser des Werkstücks im Wesentlichen konstant ist. Da der Umfang des Werkstücks linear abhängig vom Durchmesser ist, muss bei dieser Ausgestaltung die Rotationsgeschwindigkeit des Werkstücks verringert werden, wenn der aktuelle Durchmesser, den der Einwirkbereich der Laservorrichtung überstreicht, während der Axialbewegung der Laservorrichtung zunimmt.

Analog muss die Rotationsgeschwindigkeit des Werkstücks vergrößert werden, wenn der aktuelle Durchmesser, den der Einwirkbereich der Laservorrichtung überstreicht, während der Axialbewegung der Laservorrichtung abnimmt. Auf diese Weise kann erreicht werden, dass die Umfangsgeschwindigkeit des Werkstücks in dem vom Einwirkbereich der Laservorrichtung überstrichenen Oberflächenbereich konstant gehalten wird.

Das vorgeschlagene Härtungsverfahren kann beispielsweise auf einer Vorrichtung durchgeführt werden, die das Werkstück rotierend hält und neben der ein Industrieroboter angeordnet ist, der die Laservorrichtung so hält, dass die Strahlung auf die zu härtende Oberfläche trifft und der die Laservorrichtung während des Verfahrens parallel zur Längsachse des Werkstücks bewegt.

Alternativ hierzu kann das vorgeschlagene Härtungsverfahren auf einer speziell dafür eingerichteten Härtungsvorrichtung zum Oberflächenhärten eines rotationssymmetrischen Werkstücks durchgeführt werden, die ein Maschinengestell umfasst, an dem zwei koaxial angeordnete, zur Aufnahme eines rotationssymmetrischen Werkstücks ausgebildete Drehlager angeordnet sind, wobei mindestens ein Drehlager mit einer Antriebseinrichtung zur Erzeugung einer Rotation des Werkstücks wirkverbunden ist, und an dem mindestens eine Laservorrichtung zur Erzeugung einer gebündelten energiereichen Strahlung angeordnet ist, die in axialer Richtung bewegbar ist, wobei die Strahlung auf das Werkstück gerichtet ist.

Diese Vorrichtung erfüllt also die Funktionen des Haltens und des Drehens des Werkstücks sowie des Haltens und der Axialbewegung der Laservorrichtung gleichzeitig. Dadurch können besonders einfach und vorteilhaft gewünschte Parameter des Verfahrens, beispielsweise die Rotationsgeschwindigkeit des Werkstücks, die Verstellgeschwindigkeit der Laservorrichtung, die Strahlungsleistung der Laservorrichtung usw., eingestellt, überwacht und gegebenenfalls reguliert, d.h. gesteuert oder geregelt werden.

Deshalb umfasst die vorgeschlagene Härtungsvorrichtung eine Steuereinrichtung, die zur Beeinflussung des Energieeintrags in das Werkstück zur Steuerung der Rotation des Werkstücks oder/und der Translation der mindestens einen Laservorrichtung oder/und der Leistung der mindestens einen Laservorrichtung ausgebildet ist.

In einer Weiterbildung der Härtungsvorrichtung kann vorgesehen sein, dass eine Mehrzahl von Laservorrichtungen mit einem jeweiligen radialen Abstand von der äußeren Mantelfläche des Werkstücks, um die Längsachse des Werkstücks verteilt, so angeordnet und ausgerichtet ist, dass die von ihnen erzeugte Strahlung über den gesamten Umfang des Werkstücks auf das Werkstück auftrifft.

Gemäß einer weiteren Ausgestaltung der vorgeschlagenen Härtungsvorrichtung kann vorgesehen sein, dass die Laservorrichtung oder die Mehrzahl von Laservorrichtungen mit einer Antriebseinrichtung zur Erzeugung einer Bewegung in axialer Richtung des Werkstücks wirkverbunden sind. Diese Antriebseinrichtung, beispielsweise ein Elektromotor, kann dabei die Laservorrichtung mit einer relativ zu der gewählten Rotationsgeschwindigkeit des Werkstücks und der axialen Ausdehnung des Einwirkbereichs so gewählten axialen Geschwindigkeit bewegen, dass der Einwirkbereich der Laservorrichtung die Mantelfläche des Werkstücks lückenlos überstreicht.

Die vorgeschlagene Härtungsvorrichtung wird erfindungsgemäß so betrieben, dass die Rotationsgeschwindigkeit des Werkstücks abhängig von der Strahlungsleistung der Laservorrichtung, der Größe des Einwirkbereichs und dem Durchmesser des Werkstücks so gewählt wird, dass die in die Mantelfläche eingetragene Energie pro Flächeneinheit im Wesentlichen konstant ist.

Weiterhin wird die vorgeschlagene Härtungsvorrichtung erfindungsgemäß so betrieben, dass die Rotationsgeschwindigkeit des Werkstücks abhängig von einem lokalen Durchmesser des Werkstücks so gewählt wird, dass die in die Mantelfläche eingetragene Energie pro Flächeneinheit auch bei einem axial veränderlichen lokalen Durchmesser des Werkstücks im Wesentlichen konstant ist.

Das vorgeschlagene Härtungsverfahren sowie die vorgeschlagene Härtungsvorrichtung können besonders vorteilhaft bei der Herstellung eines rotationssymmetrischen Werkstücks verwendet werden, das auf seiner Mantelfläche mindestens einen gehärteten Oberflächenbereich aufweisen soll. Derartige Werkstücke können beispielsweise als rotationssymmetrisches Werkzeug Verwendung finden, das auf seiner Mantelfläche mindestens einen Arbeitsbereich aufweist, der bei bestimmungsgemäßer Verwendung des Werkzeugs auf ein zu bearbeitendes Material einwirkt. Beispiele für ein rotationssymmetrische Werkstück, das unter Verwendung des vorgeschlagenen Verfahrens oder/und auf der vorgeschlagenen Vorrichtung bearbeitet werden können, sind eine Profilwalze eines Stahlwalzwerks, die eine Welle sowie mindestens ein auf der Welle angeordnetes Kaliber aufweist, dessen äußere Mantelfläche den gehärteten Oberflächenbereich aufweist, ein Brecherkegel eines Kegelbrechers, dessen äußere Mantelfläche den gehärteten Oberflächenbereich aufweist, eine Antriebswelle einer Energieerzeugungs- oder - umwandlungsanlage, beispielsweise eines Windkraftwerks, die mindestens einen auf der Welle angeordneten Lagersitz aufweist, dessen äußere Mantelfläche den gehärteten Oberflächenbereich aufweist, usw.

Nachfolgend wird die Erfindung anhand von Ausführungsbeispielen und zugehörigen Zeichnungen näher erläutert. Dabei zeigen
Fig. 1 eine schematische Darstellung zweier in einem Stahlwalzwerk zusammenwirkender Profilwalzen,
Fig. 2 einen Brecherkegel eines Kegelbrechers, und
Fig. 3 die Oberflächenhärtung einer Profilwalze mittels zweier Laservorrichtungen.

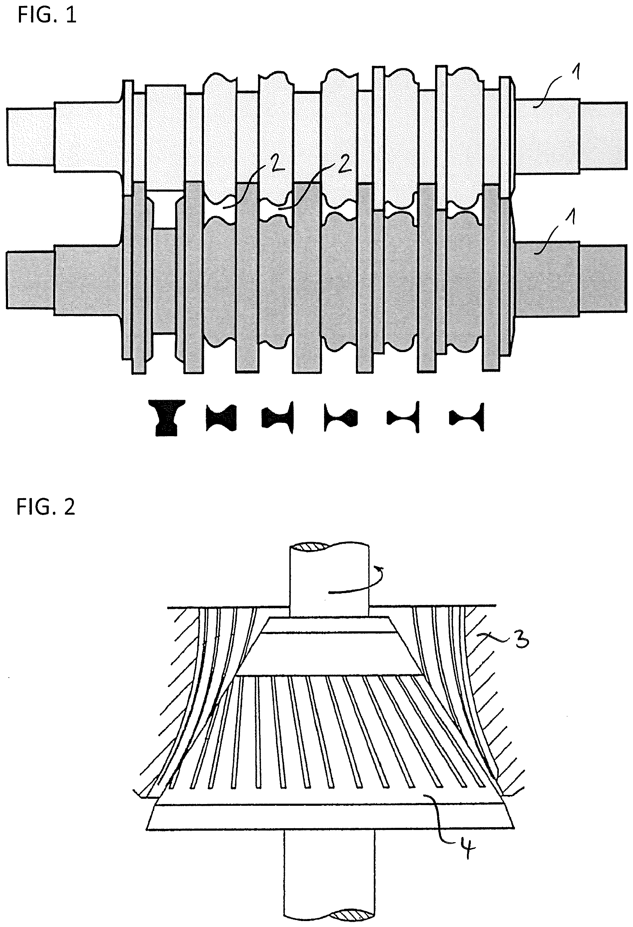

Fig. 1 zeigt zwei zusammenwirkende, gegenläufige Profilwalzen 1, wie sie in Stahlwalzwerken zur Herstellung von Stahlprofilen eingesetzt werden. Der Begriff "Kaliber" 2 bezeichnet die Profilierung im Walzenballen für das Walzen von Langprodukten. Die umlaufenden Rillen in den Profilwalzen 1 ergeben mit den Rillen der Gegenwalze und dem Walzenabstand das Profil. Die hier gezeigten, jeweils durch das Zusammenwirken der oberen und unteren Profilwalze 1 gebildeten geschlossenen Kaliber 2 erlauben eine allseitige Formgebung. Profilwalzen 1 unterliegen in ihrem Lebenszyklus einem sehr hohen Verschleiß. Dieser Verschleiß kann durch eine gehärtete Oberflächenschicht der Profilwalze 1 verringert und dadurch deren Lebensdauer erheblich erhöht werden.

Fig. 2 zeigt beispielhaft den Aufbau eines Kegelbrechers, der zur Zerkleinerung von Gestein verwendet wird. In einem Brechergehäuse 3 ist ein Brecherkegel 4 mit einem von oben nach unten geringer werdenden Abstand zur inneren Wand des Brechergehäuses 3 angeordnet. Der Brecherkegel 4 ist um seine Hochachse rotierend angebracht. Von oben eingefüllte Gesteinsbrocken werden durch die Reibung, der das Gestein zwischen der inneren Wand des Brechergehäuses 3 und der äußeren Mantelfläche des Brecherkegels 4 ausgesetzt ist, zerkleinert. Die dadurch entstehenden Bruchstücke fallen weiter in den sich nach unten verjüngenden Ringspalt zwischen Brechergehäuse 3 und Brecherkegel 4 hinab und werden wiederum zerkleinert. Dieser Vorgang setzt sich so lange fort, bis die erzeugten Bruchstücke so klein sind, dass sie nicht mehr im Ringspalt gehalten werden und daher nach unten aus dem Kegelbrecher herausfallen. Der Brecherkegel 4 ist wegen der Einwirkung der Gesteinsbrocken ebenfalls einem sehr hohen Verschleiß ausgesetzt. Dieser Verschleiß kann durch eine gehärtete Oberflächenschicht der Mantelfläche des Brecherkegels 4 verringert und dadurch dessen Lebensdauer erheblich erhöht werden.

Mit dem vorgeschlagenen Härtungsverfahren ist es möglich, entweder die Mantelfläche des Brecherkegels 4 einer vollständigen Oberflächenhärtung zu unterziehen, oder die Mantelfläche nur selektiv, beispielsweise streifenweise zu härten. Dabei können weiter beispielsweise gehärtete Streifen erzeugt werden, die ein Rautenmuster bilden. Die selektive Härtung führt dazu, dass die Gesteinsbrocken die ungehärteten Bereiche stärker abnutzen, so dass sich mit der Zeit zwischen den gehärteten Bereichen Auswaschungen bilden, die die Zerkleinerungswirkung des Kegelbrechers erhöhen.

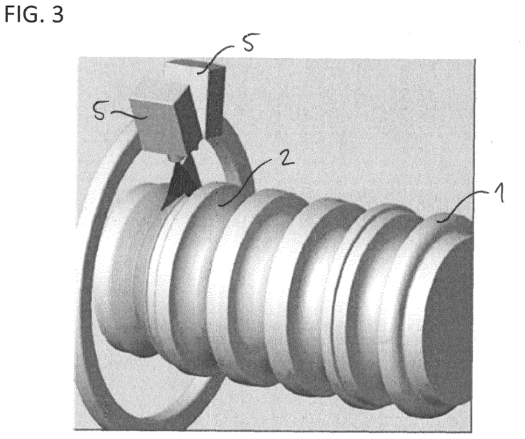

Fig. 3 zeigt eine erste Verfahrensvariante zur Oberflächenhärtung einer Profilwalze 1 im Bereich der darauf angeordneten Kaliber. Dazu wird die Profilwalze 1 in eine Härtungsvorrichtung drehbar eingespannt, die eine kontrollierte Rotationsbewegung der Profilwalze 1 erzeugt.

An oder neben der Härtungsvorrichtung ist mindestens eine Laservorrichtung 5 angeordnet, die beispielsweise von einem Industrieroboter gehalten sein kann, der in allen Richtungen beweglich ist. Die Laservorrichtung 5 projiziert einen Laserstrahl direkt auf die Profilwalze 1. Mittels einer Steuerungseinrichtung folgt der Laserstrahl in einer Spirale, Linien oder anderen denkbaren Formen der Profilwalzengeometrie.

Durch diese Methode werden Härtespuren mit ca. 1 mm Härtetiefe auf der Profilwalze 1 erzeugt. Die Härte wird durch den Werkstoff bestimmt und kann bis ca. 30% Erhöhung gegenüber dem Grundmaterial betragen.

Leider nimmt die Spurenbildung negativen Einfluss auf die Geometrie des Walzgutes. Diese Spurenbildung entsteht, wenn der Laserstrahl nicht die nötige Breite besitzt, um das gesamten Profil abzudecken, so dass in einer Spirale in radialer Richtung viele Spuren nebeneinander gelegt werden müssen, oder wo die Laserbeschießung beginnt und endet.

Zur Vermeidung der Spurenbildung kann die Überlappung benachbarter Spuren so erhöht werden, dass eine gleichmäßige Härteschicht entsteht, z.B. indem benachbarte Spuren sich um 5 mm oder 10 mm überlappen.

Eine weitere Möglichkeit zur Vermeidung der Spurenbildung besteht darin, die Profilwalze 1 mit zwei Laservorrichtungen 5, die sich um die Profilwalze 1 herum bewegen, zu bestrahlen. Dazu können die Laservorrichtungen 5 gemeinsam an einem beliebigen Punkt auf der Profilwalze 1 mit der Bestrahlung beginnen und sich anschließend auf einer Umlaufbahn um die Profilwalze 1 herum bewegen. Beide Laservorrichtungen 5 treffen sich auf der genau gegenüberliegenden Seite (180°) der Profilwalze 1 und beenden die Bestrahlung.

Alternativ kann eine Laservorrichtung 5 fest angeordnet sein, die Profilwalze 1 in eine Rotationsbewegung versetzt und die zweite Laservorrichtung 5 kreisend bis zum Startpunkt (360°) bewegt werden.

## Patentansprüche

1. Härtungsverfahren zum Oberflächenhärten eines rotationssymmetrischen Werkstücks mit einer Mantelfläche und einer Längsachse, bei dem mindestens eine Laservorrichtung so auf das Werkstück gerichtet wird, dass eine von der Laservorrichtung erzeugte, gebündelte energiereiche Strahlung auf einen Einwirkbereich der Mantelfläche einwirkt, wobei
• das Werkstück um seine Längsachse drehbar gehalten und mit einer wählbaren Rotationsgeschwindigkeit in Rotation um seine Längsachse versetzt wird, und
• die mindestens eine Laservorrichtung entlang der Längsachse des Werkstücks bewegt wird, wobei
• die Rotationsgeschwindigkeit des Werkstücks abhängig von der Strahlungsleistung der Laservorrichtung, der Größe des Einwirkbereichs und dem Durchmesser des Werkstücks so gewählt wird, dass die in die Mantelfläche eingetragene Energie pro Flächeneinheit im Wesentlichen konstant ist und wobei
• die Rotationsgeschwindigkeit des Werkstücks abhängig von einem lokalen Durchmesser des Werkstücks so gewählt wird, dass die in die Mantelfläche eingetragene Energie pro Flächeneinheit auch bei einem axial veränderlichen lokalen Durchmesser des Werkstücks im Wesentlichen konstant ist.

2. Härtungsverfahren nach Anspruch 1, bei dem
• die Laservorrichtung mindestens während einer vollen Umdrehung des Werkstücks relativ zu dessen Längsachse ortsfest gehalten wird,
• anschließend die Laservorrichtung um einen wählbaren axialen Verstellweg entlang der Längsachse bewegt wird, und
• die beiden obigen Schritte einmal oder mehrmals wiederholt werden.

3. Härtungsverfahren nach Anspruch 2, bei dem
• der Verstellweg kleiner oder gleich einer axialen Ausdehnung des Einwirkbereichs gewählt wird, und
• die beiden Schritte so oft wiederholt werden, dass der Einwirkbereich der Laservorrichtung die Mantelfläche des Werkstücks lückenlos überstreicht.

4. Härtungsverfahren nach Anspruch 1, bei dem die Laservorrichtung während der Rotation des Werkstücks relativ zu dessen Längsachse kontinuierlich bewegt wird.

5. Härtungsverfahren nach Anspruch 4, bei dem
• zunächst die Laservorrichtung von einer ersten Position zu einer zweiten Position relativ zu der Mantelfläche axial bewegt wird, und
• anschließend die Laservorrichtung von der zweiten Position zu der ersten Position axial bewegt wird.

6. Härtungsverfahren nach Anspruch 4 oder 5, bei dem die Laservorrichtung mit einer relativ zu der gewählten Rotationsgeschwindigkeit des Werkstücks und der axialen Ausdehnung des Einwirkbereichs so gewählten axialen Geschwindigkeit bewegt wird, dass der Einwirkbereich der Laservorrichtung die Mantelfläche des Werkstücks lückenlos überstreicht.

7. Härtungsvorrichtung zum Oberflächenhärten eines rotationssymmetrischen Werkstücks, umfassend
• ein Maschinengestell,
• an dem zwei koaxial angeordnete, zur Aufnahme eines rotationssymmetrischen Werkstücks ausgebildete Drehlager angeordnet sind, wobei mindestens ein Drehlager mit einer Antriebseinrichtung zur Erzeugung einer Rotation des Werkstücks wirkverbunden ist,
• an dem mindestens eine Laservorrichtung zur Erzeugung einer gebündelten energiereichen Strahlung angeordnet ist, die in axialer Richtung bewegbar ist, wobei die Strahlung auf das Werkstück gerichtet ist, und
• eine Steuereinrichtung, die zur Beeinflussung des Energieeintrags in das Werkstück zur Steuerung der Rotation des Werkstücks oder/und der Translation der mindestens einen Laservorrichtung oder/und der Leistung der mindestens einen Laservorrichtung ausgebildet ist, wobei
• die Rotationsgeschwindigkeit des Werkstücks abhängig von der Strahlungsleistung der Laservorrichtung, der Größe des Einwirkbereichs und dem Durchmesser des Werkstücks so gewählt wird, dass die in die Mantelfläche eingetragene Energie pro Flächeneinheit im Wesentlichen konstant ist und wobei
• die Rotationsgeschwindigkeit des Werkstücks abhängig von einem lokalen Durchmesser des Werkstücks so gewählt wird, dass die in die Mantelfläche eingetragene Energie pro Flächeneinheit auch bei einem axial veränderlichen lokalen Durchmesser des Werkstücks im Wesentlichen konstant ist.

8. Härtungsvorrichtung nach Anspruch 7, bei der eine Mehrzahl von Laservorrichtungen mit einem jeweiligen radialen Abstand von der äußeren Mantelfläche des Werkstücks, um die Längsachse des Werkstücks verteilt, so angeordnet und ausgerichtet ist, dass die von ihnen erzeugte Strahlung über den gesamten Umfang des Werkstücks auf das Werkstück auftrifft.

9. Härtungsvorrichtung nach Anspruch 7 oder 8, bei der die Laservorrichtung oder die Mehrzahl von Laservorrichtungen mit einer Antriebseinrichtung zur Erzeugung einer Bewegung in axialer Richtung des Werkstücks wirkverbunden sind.

10. Härtungsvorrichtung nach einem der Ansprüche 7 bis 9, bei der die Laservorrichtung mit einer relativ zu der gewählten Rotationsgeschwindigkeit des Werkstücks und der axialen Ausdehnung des Einwirkbereichs so gewählten axialen Geschwindigkeit bewegt wird, dass der Einwirkbereich der Laservorrichtung die Mantelfläche des Werkstücks lückenlos überstreicht.

## Claims

1. A hardening method for surface hardening a rotationally symmetrical workpiece having a lateral surface and a longitudinal axis, in which at least one laser device is directed onto the workpiece in such a way that concentrated high-energy radiation generated by the laser device acts on an area of action of the lateral surface, wherein
- the workpiece is held rotatably about its longitudinal axis and is set in rotation about its longitudinal axis at a selectable rotational speed, and
- the at least one laser device is moved along the longitudinal axis of the workpiece, wherein
- the rotational speed of the workpiece is chosen, dependent on the radiation output of the laser device, the size of the area of action and the diameter of the workpiece, such that the energy per unit area that is introduced into the lateral surface is substantially constant, and wherein
- the rotational speed of the workpiece is chosen, dependent on a local diameter of the workpiece, such that the energy per unit area that is introduced into the lateral surface is substantially constant even when there is an axially variable local diameter of the workpiece.

2. The hardening method according to claim 1, in which
- at least during one full revolution of the workpiece, the laser device is held fixed in place in relation to the longitudinal axis thereof,
- then the laser device is moved along the longitudinal axis by a selectable axial adjusting displacement, and
- the two steps above are repeated one or more times.

3. The hardening method according to claim 2, in which
- the adjusting displacement is chosen to be less than or equal to an axial extent of the area of action, and
- the two steps are repeated as often as it takes until the area of action of the laser device passes over the lateral surface of the workpiece without any gaps.

4. The hardening method according to claim 1, in which, during the rotation of the workpiece, the laser device is moved in relation to the longitudinal axis thereof.

5. The hardening method according to claim 4, in which
- first the laser device is moved axially from a first position to a second position in relation to the lateral surface, and
- subsequently the laser device is moved axially from the second position to the first position.

6. The hardening method according to claim 4 or 5, in which the laser device is moved at an axial speed chosen in relation to the selected rotational speed of the workpiece and the axial extent of the area of action such that the area of action of the laser device passes over the lateral surface of the workpiece without any gaps.

7. A hardening apparatus for surface hardening of a rotationally symmetrical workpiece, comprising
- a machine frame,
- on which two coaxially arranged rotary bearings designed for receiving a rotationally symmetrical workpiece are arranged, wherein at least one rotary bearing is operatively connected to a drive device for generating a rotation of the workpiece,
- on which at least one laser device for device for generating concentrated high-energy radiation is arranged, which is movable in the axial direction, the radiation being directed onto the workpiece, and
- a control device which is designed for influencing the energy input into the workpiece, for controlling the rotation of the workpiece or/and the translation of the at least one laser device or/and the output of the at least one laser device, wherein
- the rotational speed of the workpiece is chosen, dependent on the radiation output of the laser device, the size of the area of action and the diameter of the workpiece, such that the energy per unit area that is introduced into the lateral surface is substantially constant, and wherein
- the rotational speed of the workpiece is chosen, dependent on a local diameter of the workpiece, such that the energy per unit area that is introduced into the lateral surface is substantially constant even when there is an axially variable local diameter of the workpiece..

8. The hardening apparatus according to claim 7, in which in which a plurality of laser devices are arranged and aligned at a respective radial distance from the outer lateral surface of the workpiece, distributed about the longitudinal axis of the workpiece, such that the radiation generated by them impinges on the workpiece over the entire circumference of the workpiece.

9. The hardening apparatus according to claim 7 or 8, in which the laser device or the plurality of laser devices is/are operatively connected to a drive device for generating a movement in the axial direction of the workpiece.

10. The hardening apparatus according to one of claims 7 to 9, in which the laser device is moved at an axial speed chosen in relation to the selected rotational speed of the workpiece and the axial extent of the area of action such that the area of action of the laser device passes over the lateral surface of the workpiece without any gaps.

## Revendications

1. Procédé de trempe pour la trempe superficielle d'une pièce à usiner à symétrie de rotation ayant une surface latérale et un axe longitudinal, dans lequel au moins un dispositif laser est dirigé sur la pièce de telle sorte qu'un rayonnement concentré à haute énergie généré par le dispositif laser agit sur une zone d'action de la surface latérale, dans lequel la pièce à usiner est maintenue en rotation autour de son axe longitudinal et est mise en rotation autour de son axe longitudinal à une vitesse de rotation sélectionnable, et
- l'au moins un dispositif laser est déplacé le long de l'axe longitudinal de la pièce à usiner, dans lequel
- la vitesse de rotation de la pièce à usiner est choisie en fonction de la puissance de rayonnement du dispositif laser, de la taille de la zone d'impact et du diamètre de la pièce à usiner de telle sorte que l'énergie introduite dans la surface latérale par unité de surface est essentiellement constante et dans lequel
- la vitesse de rotation de la pièce à usiner est choisie en fonction d'un diamètre local de la pièce à usiner de telle sorte que l'énergie par unité de surface introduite dans la surface latérale soit sensiblement constante, même lorsque le diamètre local de la pièce à usiner varie dans le sens axial.

2. Procédé de trempe selon la revendication 1, dans lequel
- le dispositif laser est maintenu fixe par rapport à l'axe longitudinal de la pièce à usiner pendant au moins une rotation complète de celle-ci,
- le dispositif laser est alors déplacé le long de l'axe longitudinal par un déplacement de réglage axial sélectionnable, et
- les deux étapes ci-dessus sont répétées une ou plusieurs fois.

3. Procédé de trempe selon la revendication 2, dans lequel
- le déplacement de réglage est choisi inférieure ou égale à une extension axiale de la zone d'impact, et
- les deux étapes sont répétées un nombre de fois suffisant pour que la zone d'impact du dispositif laser balaye la surface latérale de la pièce à usiner sans laisser d'espace.

4. Procédé de trempe selon la revendication 1, dans lequel le dispositif laser est déplacé par rapport à l'axe longitudinal de la pièce à usiner pendant la rotation de celle-ci.

5. Procédé de trempe selon la revendication 4, dans lequel
- tout d'abord, le dispositif laser est déplacé axialement d'une première position à une deuxième position par rapport à la surface latérale, et
- ensuite, le dispositif laser est déplacé axialement de la deuxième position vers la première position.

6. Procédé de trempe selon la revendication 4 ou 5, dans lequel le dispositif laser est déplacé à une vitesse axiale choisie par rapport à la vitesse de rotation sélectionnée de la pièce à usiner et à l'extension axiale de la zone d'impact, de telle sorte que la zone d'impact du dispositif laser balaye sans interruption la surface latérale de la pièce à usiner.

7. Dispositif de trempe pour la trempe superficielle d'une pièce à usiner à symétrie de rotation, comprenant
- un bâti de machine,
- sur lequel sont disposés deux paliers rotatifs disposés coaxialement et conçus pour recevoir une pièce à usiner à symétrie de rotation, au moins un palier rotatif étant relié fonctionnellement à un dispositif d'entraînement pour générer une rotation de la pièce à usiner,
- sur lequel est disposé au moins un dispositif laser pour la production d'un rayonnement concentré à haute énergie, qui est mobile dans la direction axiale, le rayonnement étant dirigé sur la pièce à usiner, et
- un dispositif de commande qui, pour influencer l'apport d'énergie dans la pièce à usiner, commande la rotation de la pièce à usiner ou/et la translation d'au moins un dispositif laser ou/et la puissance d'au moins un dispositif laser, dans lequel
- la vitesse de rotation de la pièce à usiner est choisie en fonction de la puissance de rayonnement du dispositif laser, de la taille de la zone d'impact et du diamètre de la pièce à usiner de telle sorte que l'énergie introduite dans la surface latérale par unité de surface soit essentiellement constante et dans lequel
- la vitesse de rotation de la pièce à usiner est choisie en fonction d'un diamètre local de la pièce à usiner de telle sorte que l'énergie par unité de surface introduite dans la surface latérale soit sensiblement constante, même lorsque le diamètre local de la pièce à usiner varie dans le sens axial.

8. Dispositif de trempe selon la revendication 7, dans lequel une pluralité de dispositifs laser sont disposés à une distance radiale respective de la surface latérale extérieure de la pièce à usiner, répartis autour de l'axe longitudinal de la pièce à usiner, sont disposés et orientés de telle sorte que le rayonnement qu'ils génèrent touche la pièce sur toute sa circonférence.

9. Dispositif de trempe selon la revendication 7 ou 8, dans lequel le dispositif laser ou la pluralité de dispositifs laser sont reliés fonctionnellement à un dispositif d'entraînement pour générer un mouvement dans la direction axiale de la pièce à usiner.

10. Dispositif de trempe selon l'une des revendications 7 à 9, dans lequel le dispositif laser est déplacé à une vitesse axiale choisie en fonction de la vitesse de rotation sélectionnée de la pièce à usiner et de l'étendue axiale de la zone d'impact de sorte que la zone d'impact du dispositif laser balaye la surface latérale de la pièce à usiner sans laisser d'espace.
